# EUROPEAN PATENT SPECIFICATION

(11) **EP 3 851 688 B1**
(45) Date of publication and mention of the grant of the patent: **19.10.2022**
(21) Application number: 19860656.8
(22) Date of filing: 13.09.2019
(51) Int. Cl.: F16C 19/18, F16C 19/54, F16C 19/56, F16C 33/58, B23Q 1/70, F16C 33/62, F16C 35/12

(54) **SPINDLE DEVICE**
SPINDELVORRICHTUNG
DISPOSITIF DE BROCHE

(30) Priority: 13.09.2018 JP 2018171787
(43) Date of publication of application: 21.07.2021
(73) Proprietor: NSK Ltd., Tokyo 141-8560 (JP)
(72) Inventor: ABE, Naruaki, Fujisawa-shi, Kanagawa 251-8501 (JP); KATSUNO, Yoshiaki, Fujisawa-shi, Kanagawa 251-8501 (JP)
(74) Representative: Grünecker Patent- und Rechtsanwälte PartG mbB
(86) International application number: PCT/JP2019/036178
(87) International publication number: WO 2020/054858

(56) References cited:
- EP-A1- 1 342 570
- JP-A- H0 434 412
- JP-A- 2003 260 780
- JP-A- 2005 299 761
- JP-A- 2009 248 291
- JP-A- 2012 177 412
- JP-A- 2012 177 412

## Description

### Technical Field

The present invention relates to a spindle device having improved load resistance.

### Background Art

In recent years, for a general industrial machine (for example, a roll support mechanism for a printing machine, and a rotating cleaning machine for a semiconductor wafer), high-speed driving of a spindle is required in order to improve processing efficiency of a workpiece. At the same time, due to an increase in workpiece volume and an increase in a cutting amount of workpiece involved in high efficiency, a radial load applied to the spindle is greatly increased, and there is an increasing demand for improvement in radial load resistance of a bearing that supports the spindle. In order to improve the radial load resistance, a method of simply increasing the number of rows of angular contact ball bearings has been adopted. Accordingly, a load for each row of the bearings is relaxed, and durability of the spindle is expected to be improved.

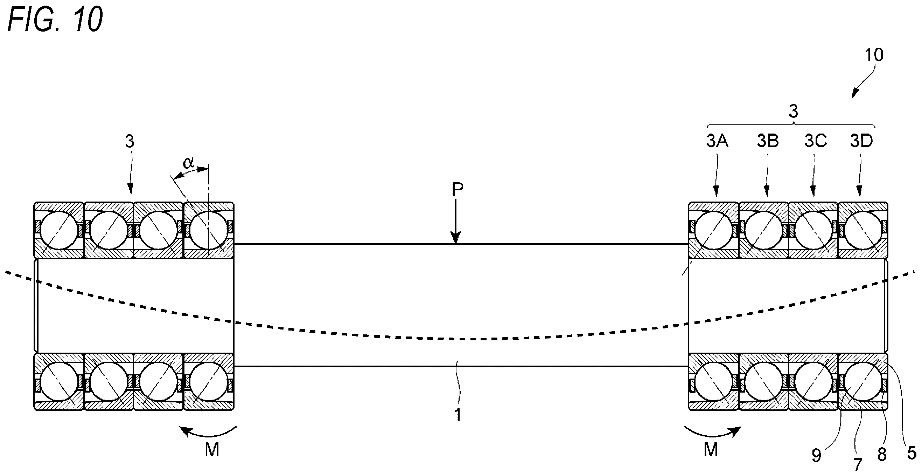

As illustrated in Fig. 10, in a spindle device 10, a spindle 1 is rotatably supported by, for example, four rows of angular contact ball bearings 3 (3A, 3B, 3C, and 3D) combined back-to-back at both ends in an axial direction of the spindle 1 and each having a contact angle α. In each angular contact ball bearing 3, a plurality of rolling elements 9 rotatably held by a cage 8 are provided between an inner ring 5 and an outer ring 7 so as to be rotatable at a contact angle α.

When a load point (indicated by P in Fig. 10) to which the load is applied is set to a center in the axial direction of the spindle 1, a radial load acting as the main stress and an axial load are applied to the angular contact ball bearing 3 that supports the spindle 1. In particular, in the angular contact ball bearing 3, Pr (dynamic equivalent radial load)/Cr (basic dynamic radial load rating) is 0.1 or more. Further, as indicated by a thick dotted line in Fig. 10, the spindle 1 is deflected at the load point P with a maximum deflection amount. Therefore, a large moment load M due to deflection is simultaneously applied to the angular contact ball bearing 3A on an inner side in the axial direction, and in each angular contact ball bearing 3 during operation, frictional heat is generated due to contact between raceway surfaces of the inner ring 5 and the outer ring 7 and the rolling elements 9, and a temperature of the bearing rises.

On the other hand, for the purpose of increasing bearing load capacity, improving rigidity of a bearing, stabilizing rotational performance, and the like, various spindle devices have been proposed in which a long service life thereof is achieved (see, for example, Patent Documents 1 and 2). In a double-row rolling bearing disclosed in Patent Document 1, in an angular contact radial bearing having two rows of rolling elements, rolling element specifications are changed with one row and the other row to increase diameters of the rolling elements on an overhang side so that the load capacity is increased. Further, in a multi-row ball bearing disclosed in Patent Document 2, it is attempted to obtain stable rotational performance by reducing a temperature difference between bearings by using ball bearings arranged in a plurality of rows as an internal specification of the bearing according to an axial position.

### Prior Art Document

### Patent Document

Patent Document 1: JP-A-2004-286116
Patent Document 2: JP-A-2005-299761

A device in which a rotating shaft to which a radial load is applied is supported to a housing via a bearing portion is disclosed in EP 1 342 570 A1.

### Summary of Invention

### Technical Problem

As illustrated in Fig. 10, in the spindle device 10 in which the angular contact ball bearings 3 are arranged in multiple rows, among four rows of the angular contact ball bearings 3, the angular contact ball bearings 3B and 3C arranged on an inner side and sandwiched by the angular contact ball bearings 3A and 3D have poor heat dissipation and temperatures of the bearings tend to rise, as compared with the angular contact ball bearings 3A and 3D arranged on an outer side. For this reason, due to severe operating conditions, the angular contact ball bearings 3B and 3C on the inner side may overheat, and seizure, detachment, creep, or the like may occur on the rolling surface of a bearing ring. Further, if the number of rows of the angular contact ball bearings 3 is increased, not only seizure during operation due to deterioration of the temperature condition described above, but also a size of the machine increases, and handling performance of the spindle 1 during repair work also decreases. Therefore, in order to prevent occurrence of a failure due to temperature rise, it is required to reduce the frictional heat generated by each angular contact ball bearing 3 to suppress the temperature rise.

The double-row rolling bearing disclosed in Patent Document 1 is applied to a CT scanner device and the like, as a double-row rolling bearing used in a state in which a load bearing point overhangs, and is different in mode from that in a spindle device of a general mechanical device in which rolling bearings are arranged on both sides of a load bearing point. Further, a relative positional relationship of the bearings in the spindle is not specified for the multi-row ball bearing disclosed in Patent Document 2.

An object of the present invention is to provide a spindle device in which a load acting on a rolling bearing is distributed appropriately since a bearing portion includes a load point side bearing portion and a counter-load point side bearing portion.

### Solution to Problem

The present invention has the following configuration.

A spindle device in which a rotating shaft to which a radial load is applied is supported to a housing via a bearing portion,
in which the bearing portion includes:
a pair of load point side bearing portions that are spaced apart from each other in an axial direction, with a load point where the radial load is applied to the rotating shaft serving as a center, and each of which has three or more rows of angular contact ball bearings; and
a pair of counter-load point side bearing portions that are spaced apart from each other at an outer side in the axial direction from the pair of load point side bearing portions, and each of which has two or more rows of angular contact ball bearings.

### Advantageous Effects of Invention

According to the spindle device of the present invention, since the bearing portion includes the load point side bearing portion and the counter-load point side bearing portion, the load acting on the rolling bearings can be distributed appropriately.

### Brief Description of Drawings

Fig. 1 is a configuration diagram illustrating an arrangement example of rolling bearings of a spindle device according to a first embodiment.
Fig. 2 is a schematic diagram illustrating a deflection suppressing effect of a spindle of the spindle device 1 illustrated in Fig. 1.
Fig. 3 is a configuration diagram illustrating an arrangement example of rolling bearings in a spindle device according to a second embodiment.
Fig. 4 is a configuration diagram illustrating an arrangement example of rolling bearings in a spindle device according to a third embodiment.
Fig. 5 is a configuration diagram illustrating an arrangement example of rolling bearings in a spindle device according to a fourth embodiment.
Fig. 6 is a configuration diagram illustrating an arrangement example of rolling bearings in a spindle device according to a fifth embodiment.
Fig. 7 is a configuration diagram illustrating an arrangement example of rolling bearings in a spindle device according to a sixth embodiment.
Fig. 8 is a configuration diagram illustrating an arrangement example of rolling bearings in a spindle device according to a seventh embodiment.
Fig. 9 is a configuration diagram illustrating an arrangement example of rolling bearings in a spindle device according to an eighth embodiment.
Fig. 10 is a configuration diagram illustrating an arrangement example of rolling bearings of a spindle device in the related art.

### Description of Embodiment

Hereinafter, preferred embodiments of a spindle device according to the present invention will be described in detail with reference to the drawings.

### <First Embodiment>

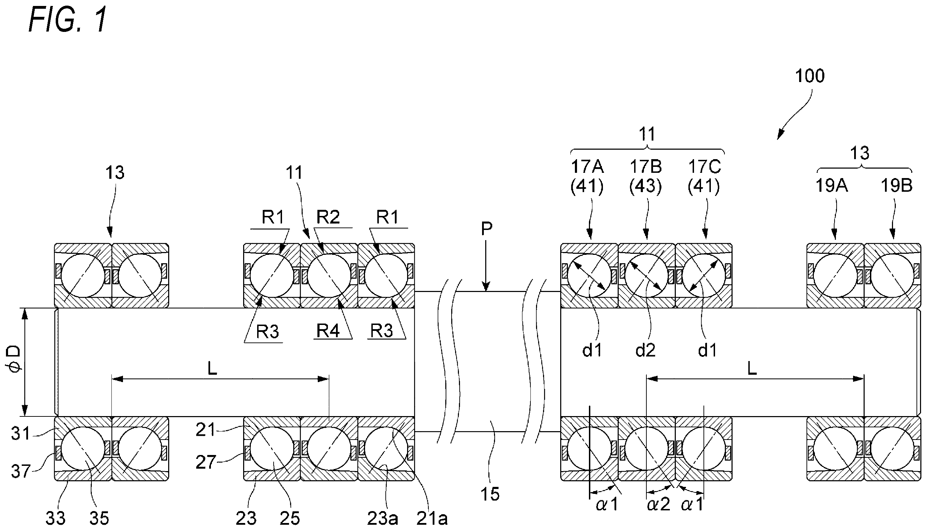

Fig. 1 is a configuration diagram illustrating an arrangement example of rolling bearings of a spindle device according to the present invention.

With a load point P of a radial load acting on a spindle 15 serving as a rotating shaft being set as a center, the spindle device 100 of the present embodiment rotatably supports the spindle 15 by a pair of load point side bearing portions (hereinafter, also referred to as a main bearing portion) 11 that are spaced apart from each other in an axial direction, and a pair of counter-load point side bearing portions (hereinafter, also referred to as a backup bearing portion) 13 that are spaced apart at outer sides in the axial direction from the load point side bearing portions 11. Although the load point P is set at the center in the axial direction of the spindle 15, the present invention is not limited thereto, and the entire of a predetermined area including the center in the axial direction may be the load point.

The main bearing portion 11 is configured with three rows of angular contact ball bearings 17A, 17B, and 17C combined back-to-back (DB combination). In the following description, among the three rows of angular contact ball bearings 17A, 17B, and 17C of the main bearing portion 11, the angular contact ball bearings (17A and 17C in the example illustrated in Fig. 1) arranged on both sides in the axial direction are also referred to as outer-side bearings 41, and the angular contact ball bearing (17B in the example illustrated in Fig. 1) that is sandwiched by the outer-side bearings 41 is also referred to as an inner-side bearing 43.

The backup bearing portion 13 is configured with two rows of angular contact ball bearings 19A and 19B combined back-to-back (DB combination), and is disposed further away from the load point P than the main bearing portion 11. That is, the pair of main bearing portions 11 is arranged symmetrically with respect to the load point P, and the pair of backup bearing portions 13 is arranged symmetrically with respect to the load point P.

Each of the angular contact ball bearings 17A, 17B, 17C of the main bearing portion 11 has contact angles α1 and α2 between an inner ring 21 and an outer ring 23, and a plurality of rolling elements 25 are disposed so as to be able to roll via a cage 27. Similarly, each of the angular contact ball bearings 19A and 19B of the backup bearing portion 13 has a contact angle between an inner ring 31 and an outer ring 33, and a plurality of rolling elements 35 are disposed so as to be able to roll via a cage 37.

When the angular contact ball bearings 17A, 17B, and 17C are operated in a state where a large load is applied, a temperature thereof rises due to friction between the inner ring 21 and the outer ring 23 and the rolling element 25. In the spindle device 100 of the present configuration, in order to suppress the temperature rise, the backup bearing portion 13 is disposed on the outer side of the main bearing portion 11 in the axial direction to reduce a moment load caused due to deflection of the spindle 15. In addition, a contact surface pressure and contact area between the inner ring 21 and the outer ring 23 and the rolling element 25 are reduced to for lower friction.

In reducing the moment load, a positional relationship between the main bearing portion 11 and the backup bearing portion 13 is important for reducing the deflection of the spindle 15. To reduce the contact area between the inner ring 21 and the outer ring 23 and the rolling element 25 in the inner-side bearing 43, raceway groove curvature ratios R of an inner ring raceway groove 21a and an outer ring raceway groove 23a in the outer-side bearing 41 are made smaller than raceway groove curvature ratios R of the inner ring raceway groove 21a and the outer ring raceway groove 23a in the inner-side bearing 43. Further, the contact angle α1 of the outer-side bearing 41 is made larger than the contact angle α2 of the inner-side bearing 43, and a diameter (rolling element diameter) d1 of the rolling element 25 of the outer-side bearing 41 is made larger than a diameter (rolling element diameter) d2 of the rolling element 25 of the inner-side bearing 43. Here, the raceway groove curvature ratios R of the inner ring raceway groove 21a and the outer ring raceway groove 23a refer to a ratio (R = r/d) of a raceway groove radius r of the inner ring 21 with respect to the diameter d of the rolling element 25 of the angular contact ball bearing 17, and a ratio of the raceway groove radius r of the outer ring 23 with respect to the diameter d of the rolling element of the angular contact ball bearing 17.

A distance from an axial center of the main bearing portion 11 to an axial center of the backup bearing portion 13 is taken as L and an inner diameter of the inner ring 21 of the main bearing portion 11 (outer diameter of the spindle 15) is taken as D. A positional relationship between the main bearing portion 11 and the backup bearing portion 13 may be set such that a dimensional ratio L/D satisfies 0.2 < L/D < 7. In the example illustrated in Fig. 1, L/D = 1.7.

When L/D decreases, a radial load of the main bearing portion 11 is excessively large. On the other hand, when L/D increases, inclination of the bearing due to the deflection of the spindle 15 increases, and the moment load is excessively large. In either case, a service life of the bearing is greatly shortened. A preferable range of L/D is 0.25 < L/D < 6, and a more preferable range thereof is 0.3 < L/D < 5.

In the main bearing portion 11, a raceway groove curvature ratio R1 of the outer ring raceway groove 23a in the outer-side bearing 41 is set to be smaller than a raceway groove curvature ratio R2 of the outer ring raceway groove 23a in the inner-side bearing 43 (R1 < R2), or a raceway groove curvature ratio R3 of the inner ring raceway groove 21a in the outer-side bearing 41 is set to be smaller than a raceway groove curvature ratio R4 of the inner ring raceway groove 21a in the inner-side bearing 43 (R3 < R4).

When the raceway groove curvature ratio increases, the contact area between the inner and outer ring raceway grooves 21a and 23a and the rolling element 25 becomes too small, and the contact surface pressure increases. When the raceway groove curvature ratio decreases, the contact area increases, and torque increases. Therefore, a balanced raceway groove curvature ratio is preferably in a range of 0.51 or more and 0.56 or less. In the example illustrated in Fig. 1, the raceway groove curvature ratios R1, R2, R3, and R4 of the inner and outer ring raceway grooves 21a and 23a in the outer-side bearing 41 and the inner-side bearing 43 are all 0.51 or more and 0.56 or less.

The contact angle α1 of the outer-side bearing 41 is set to be larger than the contact angle α2 of the inner-side bearing 43 (α1 > α2), and the diameter d1 of the rolling element 25 of the outer-side bearing 41 is set to be larger than the diameter d2 of the rolling element 25 of the inner-side bearing 43 (d1 > d2). The contact angle α suitable for balancing the load distribution in order to prevent abnormality of the main bearing portion 11 is 10° ≤ α ≤ 50°, and preferably 15° ≤ α ≤ 45°. The contact angle of the illustrated example is α1 = α2 = 35°, the diameter d1 of the rolling element 25 of the outer-side bearing 41 is 24 mm, and the diameter d2 of the rolling elements 25 of the inner-side bearing 43 is 20 mm.

Further, the amount of residual austenite on surfaces of the inner and outer ring raceway grooves 21a and 23a in the main bearing portion 11 is 50% by weight or less (specifically, the amount of residual austenite on the surface refers to the amount of residual austenite at any depth from the raceway groove surface to a depth of 400 µm). The reason for this will be described later.

In Fig. 1, bearings on an outer side of a center load in the main bearing portion 11 include three rows of the angular contact ball bearings 17 because load sharing thereof for the radial load and the moment load increases and two or more rows are required, and the backup bearing portion 13 is configured with two rows of the angular contact ball bearings 19, but the spindle device 100 is not limited to this. For example, the main bearing portion 11 may be configured with four or more rows of angular contact ball bearings, and the backup bearing portion 13 may be configured with three or more rows of angular contact ball bearings.

As described, the moment load caused due to the deflection of the spindle 15 is suppressed by limiting L/D, and the diameter d1 of the rolling element 25 of the outer-side bearing 41 is set to be larger than the diameter d2 of the rolling element 25 of the inner-side bearing 43 to suppress the amount of heat generated by the inner-side bearing 43. Accordingly, the occurrence of detachment, seizure, and creep caused by temperature rise can be suppressed.

Next, the relationship between arrangement, shape, and material of the bearing described above, and detachment, seizure, and creep will be described.

### (Detachment)

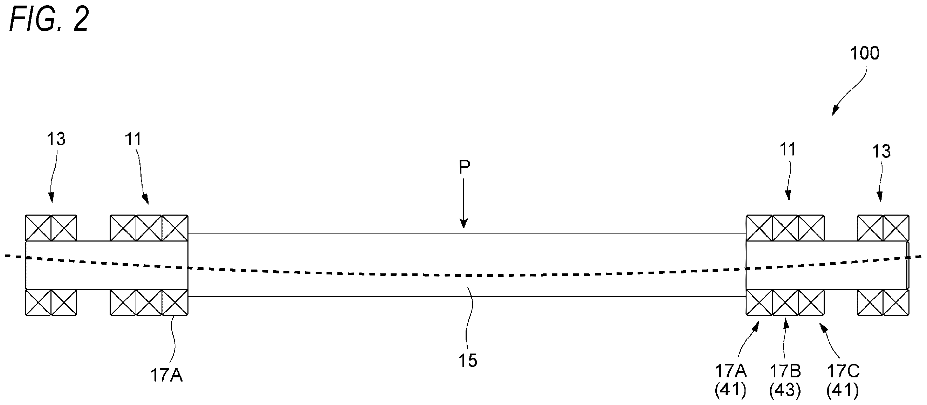

As illustrated in Fig. 2, when a radial load is applied to the load point P of the spindle 15, generally, the spindle 15 tends to bend in an arcuate shape (see a thick dotted line in the drawing), with the load point P serving as a center. In this case, a large load is applied to the bearing closest to the load point P (load point side bearing 17A). When a large load is applied to the bearing, a large contact surface pressure is generated between the inner and outer ring raceway grooves 21a and 23a and the rolling element 25. In this case, particularly in the inner ring raceway groove 21a, a large shear stress is generated. In addition, when a large stress concentrates in a fine defect inside the material thereof, a crack may occur around the fine defect. Furthermore, when the load is continuously applied to the spindle 15, the generated crack develops, and eventually a tip end of the crack reaches a surface thereof, which may cause detachment.

In order to suppress such detachment, considering a structure of the spindle device 10, it is effective to arrange the backup bearing portion 13 at the outer side of the spindle 15, away from the main bearing portion 11. Accordingly, as illustrated in Fig. 2, the deflection of the spindle 15 is suppressed, the load of the main bearing portion 11 is reduced, and the contact surface pressure between the inner and outer ring raceway grooves 21a and 23a and the rolling element 25 is suppressed to be smaller.

A contact surface pressure of the main bearing portion 11 can also be reduced by increasing the contact area between the inner and outer ring raceway grooves 21a and 23a and the rolling element 25. Specifically, considering a shape of the bearing, the contact surface pressure can be reduced by increasing the diameter d of the rolling element 25 of the inner-side bearing 43, increasing an inner/outer ring groove curvature ratio (= raceway groove radius of inner ring/rolling element diameter, or raceway groove radius of outer ring/rolling element diameter), or reducing the contact angle, with respect to that of the outer-side bearing 41. Accordingly, not only a load distribution effect by an increase in the number of rows of the angular contact ball bearings 17 can be achieved, but also load concentration on the load point side bearing 17A can be avoided, and the occurrence of detachment can be prevented.

### (Seizure)

In a case where the spindle 15 of the spindle device 10 is used for high-speed rotation, a temperature of a rolling contact portion rises due to friction between the rolling element 25 and the inner and outer ring raceway grooves 21a and 23a in a duplex bearing mounted on the spindle 15. When the temperature rise is large, seizure due to oil film shortage may occur.

Since the deflection occurs over the entire length of the spindle 15, deformation accompanying the arcuate deflection of the spindle 15 grows as a length of the spindle increases. Accordingly, in addition to the radial load, a moment load due to the deflection of the spindle 15 is also applied at the same time. Therefore, the contact surface pressure between the rolling element 25 and the inner and outer ring raceway grooves 21a and 23a is increased, and lubrication failure is likely to occur, and a seizure is likely to occur. Therefore, as a countermeasure to prevent seizure, it is effective to appropriately balance the arrangement of the main bearing portion 11 and the backup bearing portion 13 while taking into account the increase and decrease of the radial load and the moment load in the main bearing portion 11.

With respect to the outer-side bearing 41, heat generated due to rolling friction of the bearing itself is easily released to the outside and possibility of seizure caused by the heat generated due to rolling friction of the bearing is low, as compared with the inner-side bearing 43 of which both end surfaces are sandwiched by the outer-side bearings 41. On the other hand, with respect to the inner-side bearing 43, since both end surfaces thereof are sandwiched by the outer-side bearings 41, heat dissipation is likely to be insufficient, and a difference in temperature between the inner ring and the outer ring (inner ring temperature > outer ring temperature) is likely to occur due to the heat being confined. Therefore, an internal clearance of the bearing is easily reduced, and in a case of a duplex bearing to which a preload is applied in advance, the preload load is greatly increased and seizure may occur.

Therefore, by adopting such a structure in which heat generation is minimized for the inner-side bearing 43, seizure resistance of the entire duplex bearing can be improved. Since the heat generation described here is caused by friction between the inner and outer ring raceway grooves 21a and 23a and the rolling element 25, it is effective to reduce a mutual contact area. For this purpose, the diameter d of the rolling element 25 may be reduced, the inner/outer ring groove curvature ratio may be increased, and the contact angle may be reduced.

In addition, a deformation amount of the bearing at the time of temperature rise can be reduced through material selection of the bearing. In the rolling bearing, since a high contact surface pressure is generated between the rolling element 25 and the inner and outer ring raceway grooves 21a and 23a, hardness that does not cause plastic deformation is required. In order to achieve this hardness in industrial production, it is necessary to perform quenching treatment using a carbon steel of 0.5% C or more. At this time, residual austenite is likely to be generated with an increase in the amount of carbon. The residual austenite is an unstable phase and changes into martensite during long-term use, and the bearing expands with permanent deformation. This expansion may cause the inner and outer ring raceway grooves 21a and 23a to expand and may cause seizure.

Therefore, by limiting the amount of residual austenite in the material of at least one of the inner ring 21 and the outer ring 23, seizure can be suppressed. The amount of residual austenite in each material is preferably 50% by weight or less. Further, the amount of residual austenite is more preferably 40% by weight or less, and still more preferably 30% by weight or less.

### (Creep)

In the spindle device 10, since a large radial load is applied to the inner ring of the bearing, the inner ring of the bearing is compressed in a radial direction and an inner diameter thereof tends to expand. For this reason, a degree of decrease in the swaged area is large, which leads to a shortage of the caulking margin. In addition, since the inner ring 21 is a rotating side, the radial load is a so-called rotational load, and as a result, the inner ring 21 is displaced in a circumferential direction with respect to the spindle 15, which may cause creep. Even in such a case, expansion (aging) of the inner ring can be suppressed by restricting the residual austenite described above, and this abnormality can be prevented.

### <Second Embodiment>

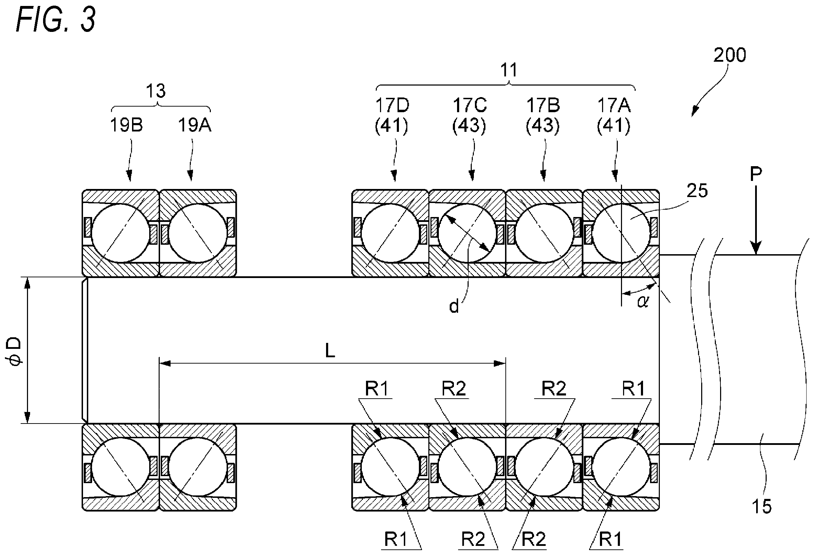

Fig. 3 is a configuration diagram illustrating an arrangement example of rolling bearings of a spindle device according to a second embodiment.

In a spindle device 200 of the present embodiment, the main bearing portion 11 is configured with four rows of angular contact ball bearings 17 (17A, 17B, 17C, and 17D) combined back-to-back (DB combination), and the backup bearing portion 13 is configured with two rows of angular contact ball bearings 19 (19A and 19B) combined back-to-back (DB combination).

L/D of the main bearing portion 11 and the backup bearing portion 13 is 3.5. In addition, an inner and outer ring groove curvature ratio R1 of the outer-side bearings 41 (17A and 17D) is 0.52, and an inner and outer ring groove curvature ratio R2 of the inner-side bearings 43 (17B and 17C) is 0.54. That is, the raceway groove curvature ratio R1 of outer rings and inner rings in the outer-side bearings 41 arranged on a load point side and a counter-load point side is smaller than the raceway groove curvature ratio R2 of outer rings and inner rings in the inner-side bearings 43 sandwiched by the outer-side bearings 41 (R1 < R2).

In the outer-side bearing 41 and the inner-side bearing 43, a diameter d of the rolling element 25 is 24 mm and a contact angle α is 30°. The effects thereof are similar to those of the spindle device 100 of the first embodiment.

### <Third Embodiment>

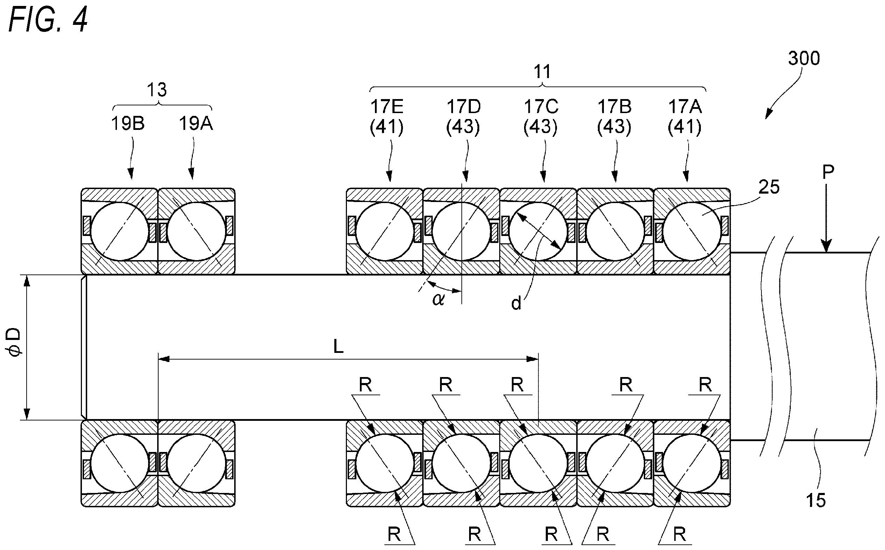

Fig. 4 is a configuration diagram illustrating an arrangement example of rolling bearings of a spindle device according to a third embodiment. In a spindle device 300 of the present embodiment, the main bearing portion 11 is configured with five rows of angular contact ball bearings 17 (17A, 17B, 17C, 17D, and 17E) combined back-to-back (DB combination), and the backup bearing portion 13 is configured with two rows of angular contact ball bearings 19 (19A and 19B) combined back-to-back (DB combination).

L/D of the main bearing portion 11 and the backup bearing portion 13 is 4.1. All the outer-side bearings 41 (17A and 17E) and the inner-side bearings 43 (17B, 17C and 17D) have an inner and outer ring groove curvature ratio R of 0.53, a diameter d of the rolling element 25 of 22 mm, and a contact angle α of 25°.

### <Fourth Embodiment>

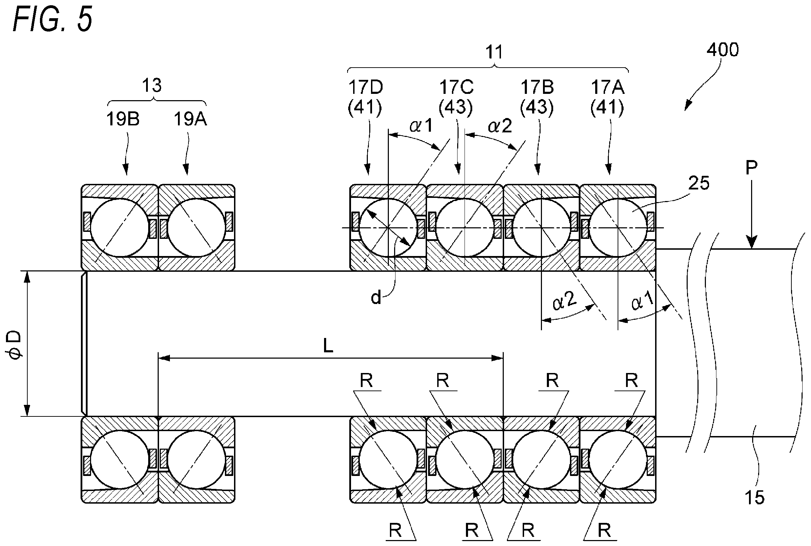

Fig. 5 is a configuration diagram illustrating an arrangement example of rolling bearings of a spindle device according to a fourth embodiment. In a spindle device 400 of the present embodiment, the main bearing portion 11 is configured with four rows of angular contact ball bearings 17 (17A, 17B, 17C, and 17D) combined back-to-back (DB combination), and the backup bearing portion 13 is configured with two rows of angular contact ball bearings 19 (19A and 19B) combined back-to-back (DB combination).

L/D of the main bearing portion 11 and the backup bearing portion 13 is 3.5. A contact angle α1 of the outer-side bearings 41 (17A and 17D) is 30°, and a contact angle α2 of the inner-side bearings 43 (17B and 17C) is 25°. That is, the contact angles have a relationship of α1 > α2.

Each of the outer-side bearings 41 and the inner-side bearings 43 has an inner and outer ring groove curvature ratio R of 0.55 and a diameter d of the rolling element 25 of 22 mm.

### <Fifth Embodiment>

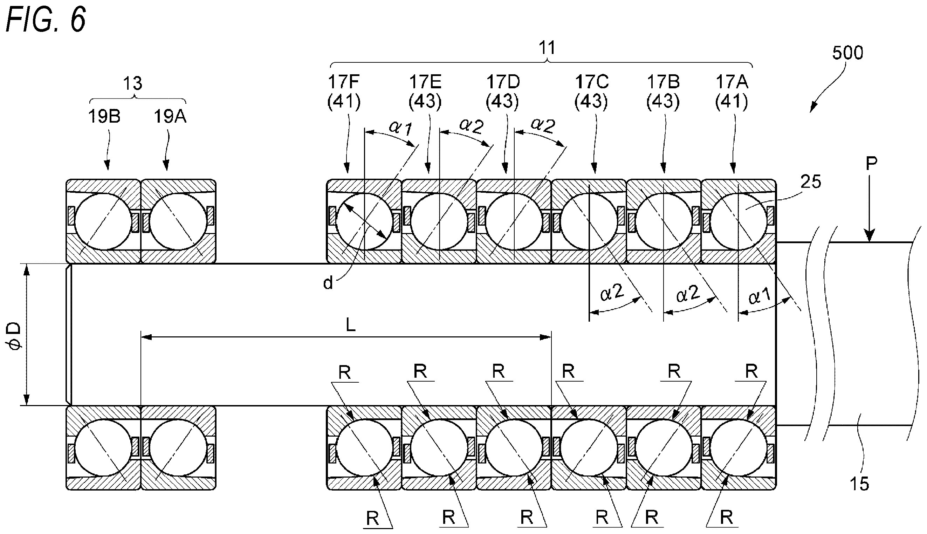

Fig. 6 is a configuration diagram illustrating an arrangement example of rolling bearings of a spindle device according to a fifth embodiment. In a spindle device 500 of the present embodiment, the main bearing portion 11 is configured with six rows of angular contact ball bearings 17 (17A, 17B, 17C, 17D, 17E and 17F) combined back-to-back (DB combination), and the backup bearing portion 13 is configured with two rows of angular contact ball bearings 19 (19A and 19B) combined back-to-back (DB combination).

L/D of the main bearing portion 11 and the backup bearing portion 13 is 5.2. A contact angle α1 of the outer-side bearings 41 (17A and 17F) is 35°, and a contact angle α2 of the inner-side bearings 43 (17B, 17C, 17D and 17E) is 30°. That is, the contact angles have a relationship of α1 > α2.

Each of the outer-side bearings 41 and the inner-side bearings 43 has an inner and outer ring groove curvature ratio R of 0.54 and a diameter d of the rolling element 25 of 24 mm.

### <Sixth Embodiment>

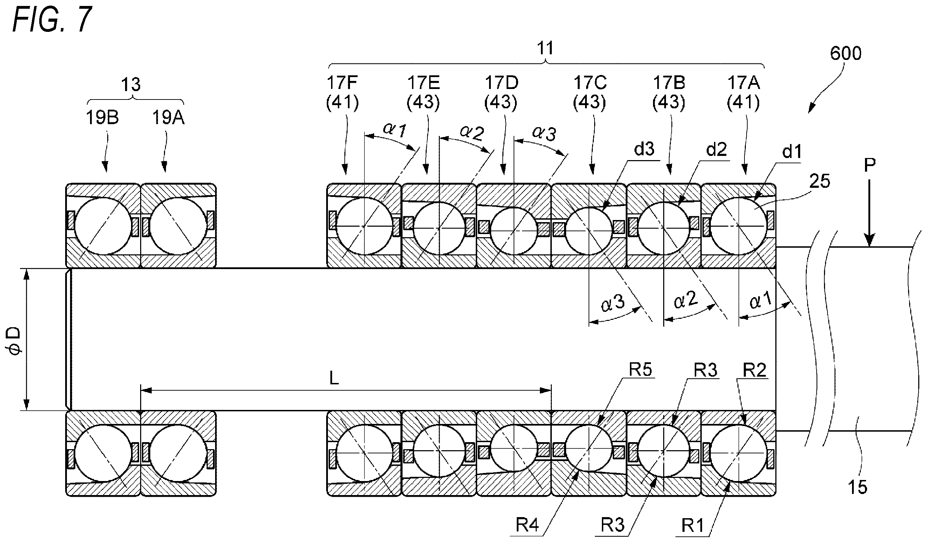

Fig. 7 is a configuration diagram illustrating an arrangement example of rolling bearings of a spindle device according to a sixth embodiment. In a spindle device 600 of the present embodiment, the main bearing portion 11 is configured with six rows of angular contact ball bearings 17 (17A, 17B, 17C, 17D, 17E and 17F) combined back-to-back (DB combination), and the backup bearing portion 13 is configured with two rows of angular contact ball bearings 19 (19A and 19B) combined back-to-back (DB combination).

L/D of the main bearing portion 11 and the backup bearing portion 13 is 5.2. A contact angle α1 of the outer-side bearings 41 (17A and 17F) is 35°. Among the inner-side bearings 43, the angular contact ball bearings 17B and 17E arranged on an outer side have a contact angle α2 of 30°, and the angular contact ball bearings 17C and 17D arranged on an inner side have a contact angle α3 of 25°. That is, the contact angles have a relationship of α1 > α2 > α3.

An outer ring groove curvature ratio R1 of the outer-side bearing 41 is 0.51, and an inner ring groove curvature ratio R2 thereof is 0.52. Among the inner-side bearings 43, each of the angular contact ball bearings 17B and 17E arranged on the outer side has an inner and outer ring groove curvature ratio R3 of 0.53, and the angular contact ball bearings 17C and 17D arranged on the inner side have an outer ring groove curvature ratio R4 of 0.54 and an inner ring groove curvature ratio R5 of 0.53.

That is, the raceway groove curvature ratio R1 of outer rings in the outer-side bearings 41 is smaller than the raceway groove curvature ratios R3 and R4 of outer rings in the inner-side bearings 43 (R1 < R3, R1 < R4). The raceway groove curvature ratio R2 of inner rings of the outer-side bearings 41 is the same as the raceway groove curvature ratio R3 of an inner ring of the angular contact ball bearing 17B in the inner-side bearings 43 (R2 = R3), and is smaller than the raceway groove curvature ratio R5 of an inner ring of the angular contact ball bearing 17 in the inner-side bearings 43 (R2 < R5).

A diameter d1 of the rolling element 25 in the outer-side bearings 41 is 24 mm. In the inner-side bearings 43, a diameter d2 of the rolling element 25 in the angular contact ball bearings 17B and 17E arranged on the outer side is 22 mm, and a diameter d3 of the rolling element 25 in the angular contact ball bearings 17C and 17D arranged on the inner side is 20 mm. That is, the diameters of the rolling element 25 have a relationship of d1 > d2 > d3.

### <Seventh Embodiment>

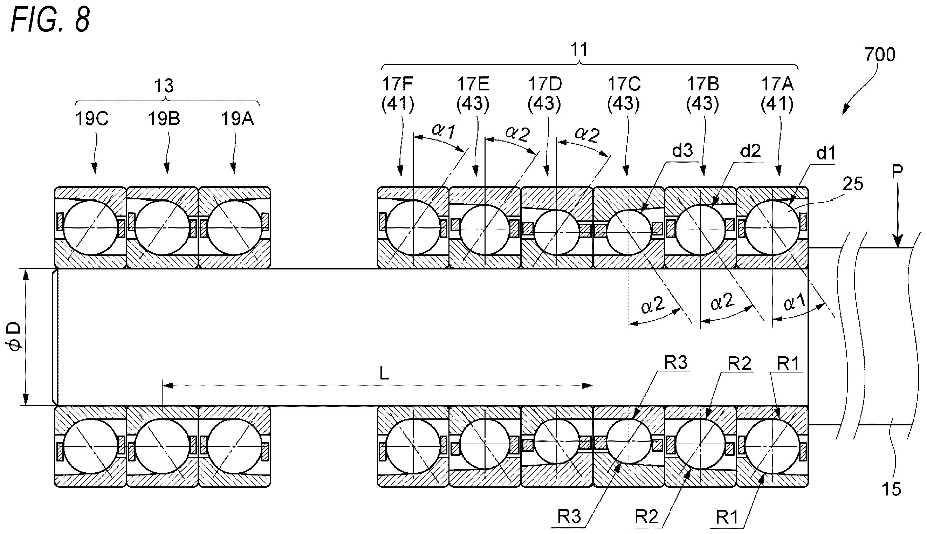

Fig. 8 is a configuration diagram illustrating an arrangement example of rolling bearings of a spindle device according to a seventh embodiment. In a spindle device 700 of the present embodiment, the main bearing portion 11 is configured with six rows of angular contact ball bearings 17 (17A, 17B, 17C, 17D, 17E and 17F) combined back-to-back (DB combination), and the backup bearing portion 13 is configured with three rows of angular contact ball bearings 19 (19A, 19B and 19C) combined back-to-back (DB combination).

L/D of the main bearing portion 11 and the backup bearing portion 13 is 6.4. A contact angle α1 of the outer-side bearings 41 (17A and 17F) is 35°, and a contact angle α2 of the inner-side bearings 43 (17B, 17C, 17D and 17E) is 30°. That is, the contact angles have a relationship of α1 > α2.

In addition, an inner and outer ring groove curvature ratio R2 of the outer-side bearings 41 is 0.52, and among the inner-side bearings 43, the angular contact ball bearings 17B and 17E arranged on an outer side have an inner and outer ring groove curvature ratio R2 of 0.53, and the angular contact ball bearings 17C and 17D arranged on an inner side have an inner and outer ring groove curvature ratio R3 of 0.54. That is, the inner and outer ring groove curvature ratios have a relationship of R1 < R2 < R3.

A diameter d1 of the rolling element 25 in the outer-side bearings 41 is 24 mm. Among the inner-side bearings 43, the angular contact ball bearings 17B and 17E arranged on the outer side have a diameter d2 of the rolling element 25 of 22 mm, and the angular contact ball bearings 17C and 17D arranged on the inner side have a diameter d3 of the rolling element 25 of 20 mm. That is, the diameters of the rolling element 25 have a relationship of d1 > d2 > d3.

### <Eighth Embodiment>

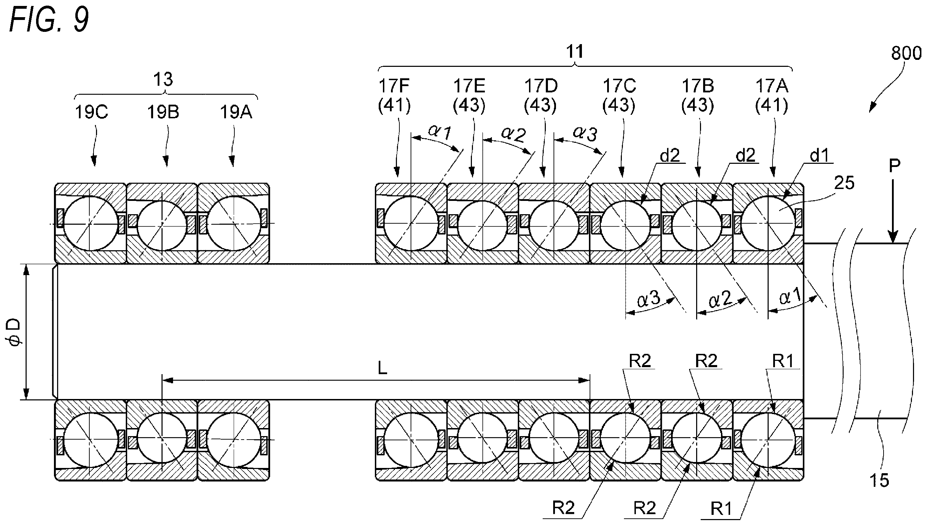

Fig. 9 is a configuration diagram illustrating an arrangement example of the rolling bearing of a spindle device according to an eighth embodiment. In a spindle device 800 of the present embodiment, the main bearing portion 11 is configured with six rows of angular contact ball bearings 17 (17A, 17B, 17C, 17D, 17E and 17F) combined back-to-back (DB combination), and the backup bearing portion 13 is configured with three rows of angular contact ball bearings 19 (19A, 19B and 19C) combined back-to-back (DB combination).

L/D of the main bearing portion 11 and the backup bearing portion 13 is 6.4. A contact angle α1 of the outer-side bearings 41 (17A and 17F) is 35°. Among the inner-side bearings 43, the angular contact ball bearings 17B and 17E arranged on an outer side have a contact angle α2 of 30°, and the angular contact ball bearings 17C and 17D arranged on an inner side have a contact angle α3 of 25°. That is, the contact angles have a relationship of α1 > α2 > α3.

An inner and outer ring groove curvature ratio R1 of the outer-side bearings 41 is 0.53, and an inner and outer ring groove curvature ratio R2 of the inner-side bearings 43 is 0.54, and the inner and outer ring groove curvature ratios have a relationship of R1 < R2.

A diameter d1 of the rolling element 25 in the outer-side bearings 41 is 24 mm, and a diameter d2 of the rolling element 25 in the inner-side bearings 43 is 22 mm, and the diameters have a relationship of d1 > d2.

According to the embodiments described above, the load acting on the rolling bearings can be distributed appropriately, and the seizure due to a local temperature rise can be suppressed.

The present invention is not limited to the above embodiments, and combinations of the respective configurations of the embodiments, or changes and applications made by those skilled in the art based on the description of the specification and the well-known technology are also intended by the present invention and are included within the scope to be protected.

For example, in the above description, the number of angular contact ball bearings 17 and 19 constituting the main bearing portions 11 and the backup bearing portions 13 arranged at the left and right ends, the dimension ratio L/D of the distance L between the main bearing portion 11 and the backup bearing portion 13 with respect to the inner diameter D of the inner ring 21 of the main bearing portion 11, the contact angle α of the angular contact ball bearings 17 and 19, the diameter d of the rolling element 25, and the inner and outer ring groove curvature ratio R are the same at left and right parts in the axial direction, but may be different.

As described above, the following matters are disclosed in the present specification.
(1) A spindle device in which a rotating shaft to which a radial load is applied is supported to a housing via a bearing portion,
   in which the bearing portion includes:
   a pair of load point side bearing portions that are spaced apart from each other in an axial direction, with a load point where the radial load is applied to the rotating shaft serving as a center, and each of which has three or more rows of angular contact ball bearings; and
   a pair of counter-load point side bearing portions that are spaced apart from each other at an outer side in the axial direction from the pair of load point side bearing portions, and each of which has two or more rows of angular contact ball bearings.

   According to this spindle device, a moment load acting on the pair of load point side bearing portions can be reduced, and the load acting on the angular contact ball bearings can be distributed appropriately. Accordingly, for example, heat generation due to friction of the angular contact ball bearing can be suppressed to prevent occurrence of abnormality such as seizure.
(2) The spindle device according to (1),
   in which with respect to the load point side bearing portions, in a case where a ratio (r/d) of a raceway groove radius r with respect to a diameter d of a rolling element of the angular contact ball bearing is taken as a raceway groove curvature ratio,
   a raceway groove curvature ratio of outer rings in outer-side bearings arranged at end portions on a load point side and a counter-load point side is smaller than a raceway groove curvature ratio of an outer ring in an inner-side bearing sandwiched by the outer-side bearings, and
   a raceway groove curvature ratio of inner rings in the outer-side bearings arranged at the end portions on the load point side and the counter-load point side is smaller than a raceway groove curvature ratio of an inner ring in the inner-side bearing sandwiched by the outer-side bearings.

   According to this spindle device, it is possible to suppress heat generation in the inner-side bearing in which heat is likely to be confined as compared with the outer-side bearings, and it is possible to prevent the occurrence of abnormality such as seizure.
(3) The spindle device according to (1) or (2),
   in which a contact angle of the outer-side bearings arranged at the end portions on the load point side and the counter-load point side in the load point side bearing portion is larger than a contact angle of the inner-side bearing sandwiched by the outer-side bearings.
   According to the spindle device, heat generation can be suppressed by reducing contact area between a raceway groove and the rolling element in the inner-side bearing.
(4) The spindle device according to any one of (1) to (3),
   in which a rolling element diameter of the outer-side bearings arranged at the end portions on the load point side and the counter-load point side in the load point side bearing portion is larger than a rolling element diameter of the inner-side bearing sandwiched by the outer-side bearings.
   According to this spindle device, heat generation can be suppressed by reducing the contact area between the raceway groove and the rolling element in the inner-side bearing.
(5) The spindle device according to any one of (1) to (4),
   in which an amount of residual austenite on a raceway groove surface in the inner and outer rings of the angular contact ball bearing is 50% by weight or less.
   According to this spindle device, it is possible to reduce volume expansion due to martensitic transformation of the residual austenite and prevent an increase in contact surface pressure between the raceway groove and the rolling element.

The present application is based on Japanese Patent Application No. 2018-171787 filed on September 13, 2018.

### Reference Signs List

- 11: main bearing portion (load point side bearing portion)
- 13: backup bearing portion (counter-load point side bearing portion)
- 15: spindle (rotating shaft)
- 17A, 17B, 17C, 17D, 17E, 17F: angular contact ball bearing
- 19A, 19B, 19C: angular contact ball bearing
- 41: outer-side bearing
- 43: inner-side bearing
- 100, 200, 300, 400, 500, 600, 700, 800: spindle device

## Claims

1. A spindle device (100, 200, 300, 400, 500, 600, 700, 800) in which a rotating shaft (15) to which a radial load is applied is supported to a housing via a bearing portion (11, 13), wherein the bearing portion comprises: a pair of load point side bearing portions (11) that are spaced apart from each other in an axial direction, with a load point where the radial load is applied to the rotating shaft (15) serving as a center, and each of which has three or more rows of angular contact ball bearings (17A, 17B, 17C, 17D, 17E, 17F); and a pair of counter-load point side bearing portions (13) that are spaced apart from each other at an outer side in the axial direction from the pair of load point side bearing portions (11), and each of which has two or more rows of angular contact ball bearings (19A, 19B, 19C).

2. The spindle device according to claim 1, wherein with respect to the load point side bearing portions (11), in a case where a ratio (r/d) of a raceway groove radius r with respect to a diameter d of a rolling element (25) of the angular contact ball bearing (17A, 17B, 17C, 17D, 17E, 17F) is taken as a raceway groove curvature ratio, a raceway groove curvature ratio of outer rings (23) in outer-side bearings (41) arranged at end portions on a load point side and a counter-load point side is smaller than a raceway groove curvature ratio of an outer ring in an inner-side bearing (43) sandwiched by the outer-side bearings (41), and a raceway groove curvature ratio of inner rings (21) in the outer-side bearings (41) arranged at the end portions on the load point side and the counter-load point side is smaller than a raceway groove curvature ratio of an inner ring in the inner-side bearing (43) sandwiched by the outer-side bearings (41).

3. The spindle device according to claim 1 or 2, wherein a contact angle of the outer-side bearings (41) arranged at the end portions on the load point side and the counter-load point side in the load point side bearing portion (11) is larger than a contact angle of the inner-side bearing (43) sandwiched by the outer-side bearings (41).

4. The spindle device according to any one of claims 1 to 3, wherein a rolling element diameter of the outer-side bearings (41) arranged at the end portions on the load point side and the counter-load point side in the load point side bearing portion (11) is larger than a rolling element diameter of the inner-side bearing (43) sandwiched by the outer-side bearings (41).

5. The spindle device according to any one of claims 1 to 4, wherein an amount of residual austenite on a raceway groove surface in the inner and outer rings of the angular contact ball bearing is 50% by weight or less.

## Patentansprüche

1. Spindelvorrichtung (100, 200, 300, 400, 500, 600, 700, 800), in der eine rotierende Welle (15), auf die eine radiale Last aufgebracht wird, über einen Lagerabschnitt (11, 13) an einem Gehäuse gelagert ist, wobei der Lagerabschnitt umfasst:
ein Paar Lagerabschnitte (11) an einer Lastpunkt-Seite, die in einer axialen Richtung voneinander beabstandet sind, wobei ein Lastpunkt, an dem die radiale Last auf die rotierende Welle (15) aufgebracht wird, als ein Mittelpunkt dient, und jeder von Ihnen drei oder mehr Reihen von Schrägkugellagern (17A, 17B, 17C, 17D, 17E, 17F) aufweist;
sowie ein Paar Lagerabschnitte (13) an einer Gegen-Lastpunkt-Seite, die voneinander an einer in der axialen Richtung von dem Paar von Lagerabschnitten (11) an einer Lastpunkt-Seite außen liegenden Seite beabstandet sind, und von denen jeder zwei oder mehr Reihen von Schrägkugellagern (19A, 19B, 19C) aufweist.

2. Spindelvorrichtung nach Anspruch 1, wobei in Bezug auf die Lagerabschnitte (11) an einer Lastpunkt-Seite, wenn ein Verhältnis (r/d) eines Laufbahnrillen-Radius r in Bezug auf einen Durchmesser d eines Wälzkörpers (25) des Schrägkugellagers (17A, 17B, 17C, 17D, 17E, 17F) als ein Laufbahnrillen-Krümmungsverhältnis angenommen wird, ein Laufbahnrillen-Krümmungsverhältnis von Außenringen (23) in Außenseiten-Lagern (41), die an Endabschnitten an einer Lastpunkt-Seite und einer Gegen-Lastpunkt-Seite angeordnet sind, kleiner ist als ein Laufbahnrillen-Krümmungsverhältnis eines Außenrings in einem Innenseiten-Lager (43), das zwischen den Außenseiten-Lagern (41) eingeschlossen ist, und ein Laufbahnrillen-Krümmungsverhältnis von Innenringen (21) in den Außenseiten-Lagern (41), die an den Endabschnitten an der Lastpunkt-Seite und der Gegen-Lastpunkt-Seite angeordnet sind, kleiner ist als ein Laufbahnrillen-Krümmungsverhältnis eines Innenrings in dem Innenseiten-Lager (43), das zwischen den Au-ßenseitenlagern (41) eingeschlossen ist.

3. Spindel-Vorrichtung nach Anspruch 1 oder 2, wobei ein Kontaktwinkel der Außenseiten-Lager (41), die an den Endabschnitten an der Lastpunkt-Seite und der Gegen-Lastpunkt-Seite in dem Lagerabschnitt (11) an einer Lastpunkt-Seite angeordnet sind, größer ist als ein Kontaktwinkel des Innenseiten-Lagers (43), das zwischen den Außenseiten-Lagern (41) eingeschlossen ist.

4. Spindelvorrichtung nach einem der Ansprüche 1 bis 3, wobei ein Wälzkörper-Durchmesser der Außenseiten-Lager (41), die an den Endabschnitten an der Lastpunkt-Seite und der Gegen-Lastpunkt-Seite in dem Lagerabschnitt (11) an einer Lastpunkt-Seite angeordnet sind, größer ist als ein Wälzkörper-Durchmesser des Innenseiten-Lagers (43), das zwischen den Außenseiten-Lagern (41) eingeschlossen ist.

5. Spindelvorrichtung nach einem der Ansprüche 1 bis 4,
wobei eine Menge an Restaustenit an einer Laufbahnrillen-Oberfläche in dem Innen- und dem Außenring des Schrägkugellagers 50 Gew.-% oder weniger beträgt.

## Revendications

1. Dispositif de broche (100, 200, 300, 400, 500, 600, 700, 800) dans lequel un axe rotatif (15) auquel est appliqué une charge radiale est supporté par un boîtier via une portion de roulement (11, 13), dans lequel la portion de roulement comprend : une paire de portions de roulement côté point de charge (11) qui sont espacées entre elles en direction axiale, avec un point de charge où la charge radiale est appliquée à l'axe rotatif (15) servant de centre, chacune comportant au moins trois rangées de roulements à billes à contact oblique (17A, 17B, 17C, 17D, 17E, 17F) ; et une paire de portions de roulement côté point de contre-charge (13) qui sont espacées entre elles sur un côté externe en direction axiale de la paire de portions de roulement côté point de charge (11), comportant chacune au moins deux rangées de roulements à billes à contact oblique (19A, 19B, 19C).

2. Dispositif de broche selon la revendication 1, dans lequel, par rapport aux portions de roulement côté point de charge (11), dans le cas où le ratio (r/d) du rayon r de la gorge de chemin de roulement par le diamètre d d'un élément de roulement (25) du roulement à billes à contact oblique (17A, 17B, 17C, 17D, 17E, 17F) est pris comme ratio de courbure de la gorge de chemin de roulement, le ratio de courbure de la gorge de chemin de roulement d'anneaux externes (23) dans des roulements côté externe (41) agencés à des portions terminales sur un côté point de charge et un côté point de contre-charge est inférieur au ratio de courbure de la gorge de chemin de roulement d'un anneau externe dans un roulement côté interne (43) intercalé entre les roulements côté externe (41), et le ratio de courbure de la gorge de chemin de roulement d'anneaux internes (21) dans les roulements côté externe (41) agencés aux portions terminales sur le côté point de charge et le côté point de contre-charge est inférieur au ratio de courbure de la gorge de chemin de roulement d'un anneau interne dans le roulement côté interne (43) intercalé entre les roulements côté externe (41).

3. Dispositif de broche selon la revendication 1 ou 2, dans lequel l'angle de contact des roulements côté externe (41) agencés aux portions terminales du côté point de charge et du côté point de contre-charge dans la portion de roulement côté point de charge (11) est supérieur à l'angle de contact du roulement côté interne (43) intercalé entre les roulements côté externe (41).

4. Dispositif de broche selon l'une quelconque des revendications 1 à 3, dans lequel le diamètre d'élément de roulement des roulements côté externe (41) agencés aux portions terminales du côté point de charge et du côté point de contre-charge dans la portion de roulement côté point de charge (11) est supérieur au diamètre de l'élément de roulement du roulement côté interne (43) intercalé entre les roulements côté externe (41).

5. Dispositif de broche selon l'une quelconque des revendications 1 à 4, dans lequel la quantité d'austénite résiduelle sur la surface de gorge de chemin de roulement dans les anneaux interne et externe du roulement à billes à contact oblique est inférieure ou égale à 50 % en masse.
